Europäisches Patentamt

European Patent Office

Office européen des brevets

(11) Publication number: **0 455 243 B1**

# EUROPEAN PATENT SPECIFICATION

(45) Date of publication of patent specification: **01.02.95**  (51) Int. Cl.[6]: **B01D  9/00**

(21) Application number: **91107120.7**

(22) Date of filing: **02.05.91**

(54) **Draft tube, direct contact crystallizer.**

(30) Priority: **03.05.90 US 518521**

(43) Date of publication of application:
**06.11.91 Bulletin  91/45**

(45) Publication of the grant of the patent:
**01.02.95 Bulletin  95/05**

(84) Designated Contracting States:
**BE DE ES FR IT**

(56) References cited:
**EP-A- 0 180 796
BE-A- 393 136
FR-A- 2 305 496
GB-A- 1 047 174**

(73) Proprietor: **PRAXAIR TECHNOLOGY, INC.**
**39 Old Ridgebury Road**
**Danbury, CT 06810-5113 (US)**

(72) Inventor: **Tat-Yan Cheng, Alan**
**320 Hillside Avenue**
**Livingston,**
**N.J. (07039) (US)**

(74) Representative: **Schwan, Gerhard, Dipl.-Ing.**
**Elfenstrasse 32**
**D-81739 München (DE)**

Rank Xerox (UK) Business Services
(3.10/3.09/3.3.3)

## Description

### FIELD OF THE INVENTION

The invention relates to a direct contact crystallizer. More particularly, the invention relates to a draft tube, direct contact crystallizer which uses gaseous or liquid nitrogen to simultaneously cool and agitate a crystal slurry.

### BACKGROUND OF THE INVENTION

Continuous suspension of crystallizing solids and supersaturated liquid are critical to growing uniform crystals. Early designs of direct contact crystallizers used high volumes of refrigerants. Examples of refrigerants successfully used in direct contact crystallizers include freon, water, alcohol solution, butane, propane, and air. However, these crystallizers failed to provide true solid suspension or thorough mixing.

Most current direct contact crystallizers use mechanical units to recompress refrigerants such as propane, butane, or methane. The cost of these mechanical vapor recompression units is very high because a condenser must be used to remove evaporated solvent before recompression. Furthermore, there are costs associated with installing a motor, reducer, and agitator to keep the crystals in suspension. Thus, these known crystallizers are usually very expensive. A further drawback is that testing of these crystallizers has revealed that they cause secondary nucleation due to mechanical agitation. Fine crystals produced due to secondary nucleation tend to cake easily.

These mechanical-type crystallizers are equipped with agitators for vigorously stirring the slurry and keeping the crystals in suspension. The speed of the agitator must be fast enough to prevent large crystals from settling and coagulating in the bottom of the vessel. However, fast rotating agitators can breakdown large crystals on impact.

In addition to breaking down large crystals, the impact of crystals on the mechanically agitated surfaces of other crystals promotes secondary nucleation and caking of the crystals. Secondary nucleation is undesirable because it broadens crystal size distribution and depletes super saturation of the slurry. Also, fine crystals produced by secondary nucleation are difficult to filter. Thus, recycling is necessary. Although a well-mixed crystallizer is better than crystals flowing co-currently to the supersaturated solution, it is still inferior to the ideal operating conditions where the crystal is flowing counter-currently to the supersaturated solution.

A direct contact crystallizer known from EP-A-0 180 796 comprises a vessel containing the crystal slurry; a vertical draft tube positioned in the vessel, which draft tube has an upper end located below the liquid level of the crystal slurry and a lower end spaced above the bottom surface of the vessel; and an injection nozzle disposed within the draft tube for injecting into the slurry a liquid, particularly trichloromonofluoromethane, which liquid is not miscible with the solvent of the solution to be crystallized, and which liquid is vaporized within the draft tube.

### Summary of the Invention

The subject invention, in conformity with one aspect thereof, comprises a direct contact crystallizer for cooling and agitating a crystal slurry and continuously suspending crystallizing solids, comprising a vessel containing said crystal slurry, a vertical draft tube positioned in said vessel, said draft tube having an upper end located below the liquid level of said crystal slurry and a lower end spaced above the bottom surface of said vessel; and an injection nozzle made of polytetrafluoroethylene, or other fluorohydrocarbon, positioned at said lower end of said draft tube, and adapted to inject cold nitrogen gas or vaporized liquid nitrogen into said draft tube.

The present invention, according to a further aspect thereof, comprises a method of cooling and agitating a crystal slurry in a crystallizer vessel having a draft tube comprising the steps of:

injecting cold nitrogen gas or vaporized liquid nitrogen through an injection nozzle made of polytetrafluoroethylene or other fluorohydrocarbon into a lower end of said draft tube to create gas bubbles which expand and rise within said draft tube;

directing said crystal slurry into said lower end of said draft tube to mix with said gas bubbles and flow upwards through said draft tube;

deflecting said crystal slurry and said gas bubbles to flow outwardly of said draft tube and to circulate toward said nozzle at said lower end of said draft tube; and

remixing said crystal slurry with said gas bubbles to recirculate upwardly through said draft tube.

The direct contact crystallizer of this invention was developed to maximize solid suspension while minimizing secondary nucleation in a crystal slurry.

Injecting gaseous or liquid nitrogen inside a crystallizer is a difficult task. The invention uses a well-insulated pipe/tube, having a double wall construction for minimizing freezing in the outer wall, to transfer the cold nitrogen gas or liquid to a nozzle positioned at the lower end of the draft tube.

When the mother liquid (i.e., the crystal slurry) contacts the cold gaseous or liquid nitrogen, ice and crystals can form. To prevent ice or crystals from adhering to the nozzle wall, polytetrafluoroethylene (TEFLON) or other fluorohydrocarbon is used in constructing the nozzle. The nozzle wall is thick enough so that the temperature on the outside of the nozzle is close to the temperature of the crystal slurry. The high velocity inside the draft tube prevents ice formation and fouling on the nozzle by reducing the thermal boundary layer next to the cold surfaces.

In a three phase flow of a typical draft tube crystallizer, most of the liquid momentum is lost when the three phase mixture reaches the liquid surface in the form of waves and splashes. The invention uses a submerged baffle to change the direction of the three phase mixture before any gas is separated from the mixture. The submerged baffle results in a higher sweeping motion of the liquid outside of the draft tube. Crystals are less likely to settle at the bottom of the crystallizer. As a result, a wider body crystallizer vessel can be used.

## BRIEF DESCRIPTION OF THE DRAWINGS

Fig. 1 shows a direct contact crystallizer in accordance with a preferred embodiment of the invention.

Fig. 2 shows a detail view of the injection nozzle in Fig. 1.

Fig. 3 shows a direct contact crystallizer in accordance with another embodiment of the invention.

Fig. 4 shows a direct contact crystallizer in accordance with a third embodiment of the invention.

Fig. 5 and 6 show crystal size distributions for the direct contact crystallizer of Fig. 1 compared to those for a conventional direct contact crystallizer.

Fig. 7 shows a multiple draft tube and injection nozzle arrangement used in retrofitting a conventional crystallizer vessel or reactor.

Fig. 8 shows a direct contact crystallizer having direct liquid/gas injection in combination with indirect contact cooling coils.

## DETAILED DESCRIPTION OF THE INVENTION

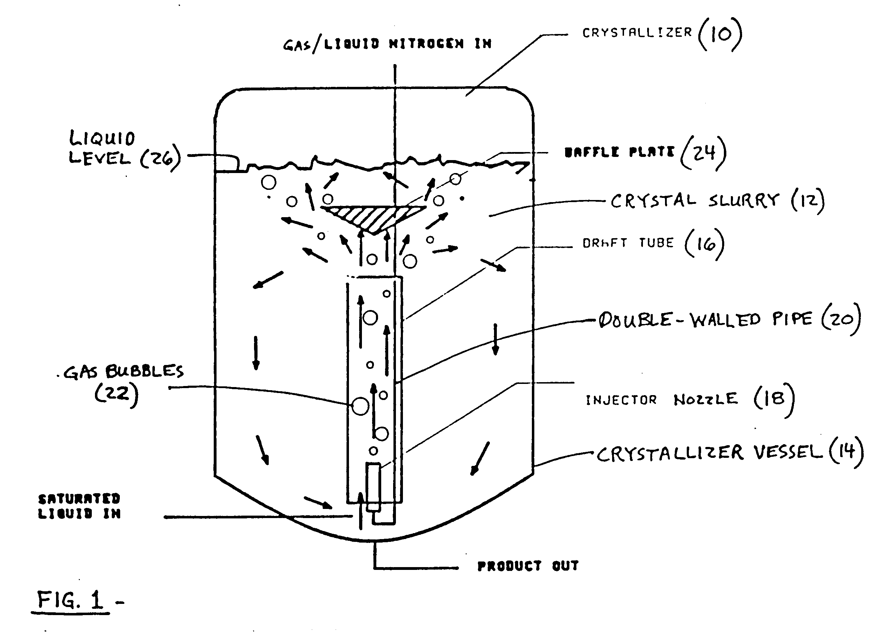

Referring to Fig. 1, the draft tube, direct contact crystallizer 10 of this invention uses gaseous or liquified nitrogen to simultaneously cool and agitate a crystal slurry 12. The direct contact crystallizer can be used to crystallize, for example, potassium thiosulfate, citric acid, sodium thiosulfate, para-xylene, sodium hydroxide, sodium sulfate, potassium chloride, lactose, boric acid, or any organic, inorganic, or pharmaceutical chemical that can be separated from a solvent by cooling or evaporative crystallization. It can also be used for winterizing edible oils, purifying antibiotics, aerating water tanks, and dewatering organic chemicals (by freezing the water into ice crystals).

The concepts of this invention can also be used for stirring molten metals, such as argon-oxygen decarbonization, and stripping hydrogen from aluminum. However, these uses require special attention and consideration to the types of materials utilized in the baffle plate, draft tube, and nozzle constructions. Refractory materials and graphite are preferable in constructing the vessel, baffle plate, draft tube and nozzle.

The direct contact crystallizer 10 has four primary sections: 1) a liquid/gas injection system, 2) a liquid/gas transfer pipe, 3) a draft tube assembly, and 4) a baffle plate assembly. A vertical draft tube 16 is installed at the center of a crystallizer vessel 14. However, the draft tube 16 can also be installed in an off-centered position if the vessel only has an off-centered opening. The draft tube 16 and the vessel 14 can be made of any materials compatible with the chemical to be crystallized. Stainless steel as well as glass have been used with success.

The physical dimensions of the vessel 14 and draft tube 16 can vary. However, there are certain limitations. The vessel 14 can be as large or small as construction parameters will allow. The diameter of the draft tube 16 can range from 1 percent to 70.7 percent (i.e., the square root of 1/2) of the vessel diameter. When the draft tube is 70.7 percent of the vessel diameter, the cross-sectional area inside the draft tube is approximately the same as the cross-sectional area outside the draft tube 16. Preferably, the diameter of the draft tube 16 is 10 to 20 percent of the vessel diameter to achieve sufficient turbulence and uplift. For a very large vessel, multiple draft tubes can be provided instead of a single draft tube. Furthermore, for a very large draft tube, multiple injection nozzles with vertical partition can be used to reduce back-mixing inside the draft tube.

The distance between the annular opening at the lower end of the draft tube 16 and the bottom surface of the vessel 14 is approximately calculated as one-fourth (1/4) of the inside diameter of the draft tube. This annular opening generally has the same area as inside the draft tube. Thus, the liquid velocity at the opening is the same as inside the draft tube. A smaller opening will result in higher linear velocity. This higher velocity is good for sweeping heavier crystal slurry, but the pressure drop increases due to flow resistance. However, the distance between the draft tube opening and the vessel bottom can be adjusted (e.g., during equipment set-up) in order to increase or decrease the suction on settling particles.

An injection nozzle 18 is positioned at the bottom of the crystallizer 10 and pointed vertically upwards to project into the lower end of the draft tube 16. The bottom of the crystallizer vessel 14 is preferably conically-shaped so that solids will be directed toward the injection nozzle 18, thereby leaving no dead corners in the crystallizer 10. However, the crystallizer assembly (i.e., draft tube, baffle, double walled tube, and injection nozzle) can be used to retrofit any type of vessel or reactor, including rounded, flat-bottomed, or conical vessels.

The nozzle 18 is used to inject gaseous or liquid nitrogen directly into the crystallizer 10. The nozzle wall is thick enough so that the temperature on the outside of the nozzle 18 is close to the temperature of the crystal slurry 12. The diameter of the nozzle 18 is reduced to increase injection velocity and prevent liquid from reentering the nozzle.

The nozzle 18 is preferably constructed of polytetrafluoroethylene (TEFLON) to prevent ice or crystals from adhering to the nozzle wall. TEFLON or flurohydrocarbons give the best non-wetting properties with low thermal conductivity so that ice or crystals will not adhere to the surface. If liquid nitrogen is used, the nozzle material should be capable of handling thermal shock.

The nozzle 18 has a length which does not result in excess pressure drops. It should not be less than one-half (1/2) of the diameter of the nozzle itself. Also, the nozzle wall should be thick enough so that the temperature outside the wall is very close to the bulk temperature of the slurry. The thickness can be calculated as follows:

$$L = -K_a A(T_o - T_1)/Q$$

where

| | | |
|---|---|---|
| L | = | Wall thickness |
| $K_a$ | = | Thermal conductivity of the material |
| A | = | Area |
| $T_o$ | = | Bulk temperature of the slurry |
| $T_1$ | = | Gas/liquid temperature inside |
| Q | = | Total heat flux |

The nozzle wall can be made of multiple layers of insulation material to reduce the thermal conductivity. With better insulation, a thinner wall nozzle can be used.

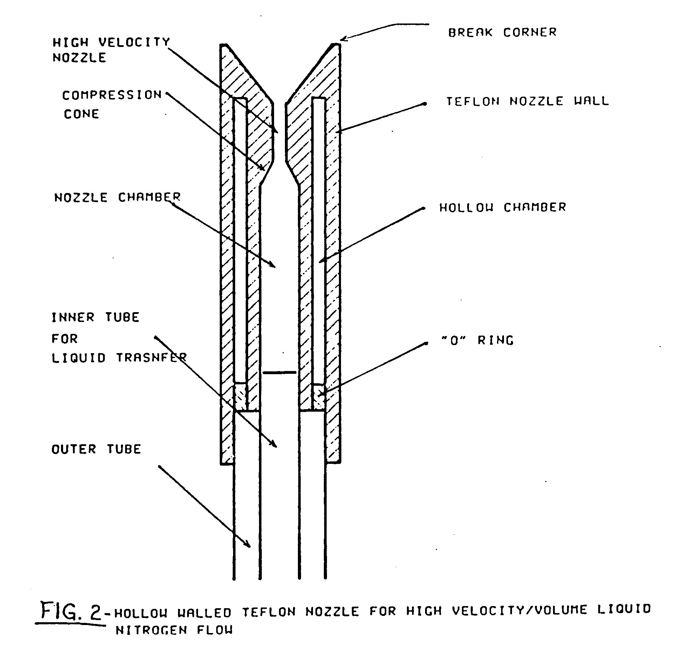

Fig. 2 shows the design of the nozzle 18. This nozzle has an inner hollow chamber to reduce thermal conductivity. It also allows a more gradual transition for the gas to accelerate to sonic/supersonic velocity. Instead of having a hollow chamber, the nozzle can also be made of solid TEFLON. The wall thickness, however, would have to be increased.

For a given range of liquid or gaseous flow rates, the inside diameter of the smallest nozzle must be sized so as not to cause a pressure drop greater than the available supply pressure. At a given supply pressure and flow rate, a larger nozzle will cause the gas/liquid to be ejected at a lower linear velocity.

The linear velocity should be large enough to prevent back-fill of liquid and ice crystal adhesion (e.g., not less than approx. 3 m/s (10 ft/sec)). Gas is preferably injected at sonic velocity (e.g., approx. 305 m/s (1,000 ft/sec)) and liquids is injected at subsonic speed but achieves sonic velocity as it vaporizes. Smaller (i.e., finer) gas bubbles than other processes are formed at a high injection velocity and achieve better heat transfer rate. Smaller or finer gas bubbles means better chance for total thermal equilibrium or utilization of the cooling value of the liquid nitrogen. The velocity of the crystal slurry through the draft tube should be large enough to suspend the solids (i.e., larger than the terminal settling velocity of the crystals).

The volumetric flow rate of the liquid or gaseous nitrogen depends on the cooling rate of the crystal slurry (which is affected by the size and type of slurry). A higher cooling/evaporative rate will reduce the total batch time, but the cooling rate generally should not create more than $1.7\,^\circ C$ ($3\,^\circ F$) of supersaturation. Excess driving force due to supersaturation will create abnormal crystal growth.

If liquid nitrogen is available, the temperature of the liquid nitrogen should be at its boiling point or lower, e.g., $-196\,^\circ C$ ($77\,^\circ K$). The gaseous nitrogen can be at any temperature. The colder the gas available, the better the cooling value.

The crystal slurry can be controlled at any temperature depending on the type of chemicals and the amount of crystal to be recovered. More crystals can be recovered at a lower slurry temperature. However, this lower temperature may cost more energy/gases per kg (pound) of crystal to be recovered. Furthermore, crystal phase may also change. The lowest temperature limit will be the freezing point of the solvent and the upper limit will be the boiling point.

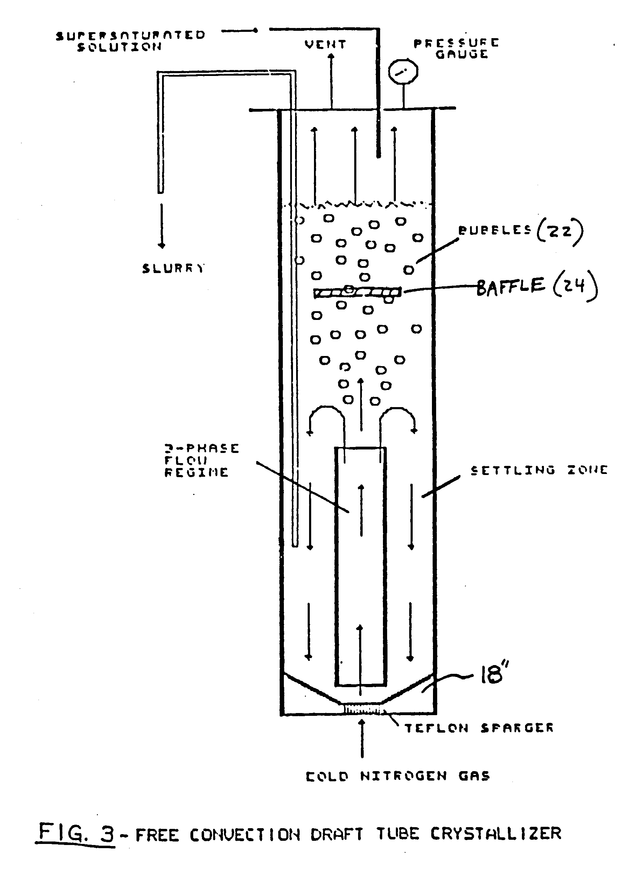

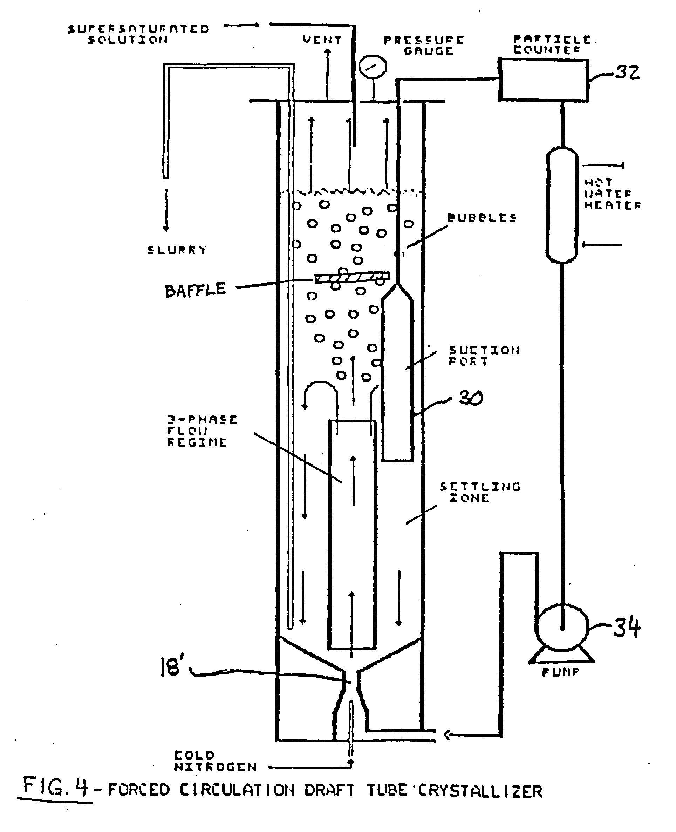

Figs. 3 and 4 show alternative embodiments of the crystallizer 10. The gaseous or liquid nitrogen can be injected through an orifice opening 18' in the bottom of the crystallizer as shown in Fig. 4 or through a perforated TEFLON disk plate 18'' having small holes as shown in Fig. 3. The distance between the draft tube and the orifice opening or perforated disk plate can be adjusted.

A well-insulated transfer tube or pipe 20 is used to transfer high-quality gaseous or liquid nitrogen to the nozzle 18. The transfer pipe 20 has a double wall construction to minimize freezing in the outer wall. This double wall construction is also important to keep liquid nitrogen from vaporizing inside the tube. For example, the liquid nitrogen can be injected at a rate of 181 kg/h (400 lb/hr) at 377 kPa (40 psig) through a 6.35 mm (1/4") TEFLON nozzle. If the liquid vaporizes before reaching the exit of the nozzle, the gaseous nitrogen will expand and be required to travel at 1390 m/s (4,559 ft/sec) inside the line to inject an equivalent amount of liquid, which is far above the velocity of sound. Since the gas velocity can not exceed the speed of sound, the volumetric flow rate must be reduced. Thus, if the transfer pipe is not properly insulated, the vaporized gas will drastically reduce the flow of gas/liquid and will result in an insufficient cooling rate.

A preferred insulation for the transfer tube is to pull a vacuum between the double wall. However, vacuum insulation is very expensive. Other types of insulation materials such as ARMERFLEX or FIBERGLAS will lose insulation value if they get wet. Thus, a stainless steel double wall construction has been found to be the most economical type of insulation.

With this double walled configuration, a very large quantity of gas/liquid nitrogen can be injected using a very small nozzle. For example, by regulation, a supply pressure between 101 to 377 kPa (0-40 psig) and 0 to 181 kg/h (0-400 lb/hr) of liquid can be injected through a very small nozzle (e.g., 9.5 mm (3/8") double walled tube with a 6.35 mm (1/4") nozzle). Other crystallizer constructions would require a very large opening pipe.

With very high turbulence inside the draft tube, the doubled walled tube is installed inside the draft tube. The chance of ice formation and crystal fouling is reduced due to reduced thermal boundary layer and cold spot. The pipe 20 is made of stainless steel with TEFLON spacers for minimum heat conduction. In a test where 454 kg/h (1000 lb/hr) of liquid nitrogen was injected into water, no ice formation resulted on the nozzle or the piping.

In operation, the nozzle 18 injects gaseous or liquid nitrogen directly into the crystallizer 10. As the gas and vaporizing liquid are injected at sonic velocity, fine gas bubbles are formed due to shockwaves. These fine gas bubbles have higher surface area for heat transfer. Thus, the nozzle allows better utilization of the cooling value.

Due to the restriction of the centrally-positioned draft tube 16, the gas forces both the liquid and the solid to flow upwards. The solid will remain suspended and will continuously circulate as long as the drag force of the nitrogen gas bubbles 22 is greater than the gravitational force minus the buoyancy force of the solids.

The draft tube 16 is positioned so that the opening between the lower end of the draft tube 16 and the bottom of the crystallizer vessel 14 is large enough for the crystal slurry 12 to flow through, but small enough so that fluid velocity will be greater than settling velocity of the crystals. The draft tube creates sufficient turbulence so that thermal equilibrium can be achieved (e.g., the exiting gas has the same temperature as the bulk of the liquid). Also, the high slurry velocity inside the draft tube 16 prevents ice formation and fouling by reducing thermal boundary layer next to any cold surfaces.

No mechanical agitators or re-circulation pumps are necessary in the direct contact crystallizer of this invention. The crystals are suspended and circulated by gas bubbles 22 rising from the injection nozzle 18. The direct contact crystallizer of the invention forms crystals of uniform shape and narrow size distribution, and minimizes fouling of heat exchanger surfaces.

Preferably, the liquid nitrogen direct contact crystallizer 10 has a conical bottom with an approximate 45 degree slant toward the center so that the crystals will flow toward the nozzle 18 and eventually be lifted to the top of the draft tube. However, the crystallizer assembly can be used to retrofit vessels or reactors that do not have conical bottoms.

The largest crystals will settle fastest and are the first to contact the cold gas from the injection nozzle 18 where supersaturation is at its maximum. Subsequently, the larger crystals receive a higher recirculation and growth rate than the smaller crystals. As a result, this crystallizer configuration not only minimizes secondary nucleation, but also enhances the growth rate of the larger crystals.

Typically, as the gas bubbles 22 reach the top of a draft tube 16, a sudden release of pressure occurs, thereby resulting in extremely turbulent mixing of the gas bubbles 22 and the crystal slurry 12. The momentum due to the upward thrust of the gas bubbles 22 rising through the draft tube 16 is usually dissipated as waves and splashes. However, a submerged baffle 24 is used to change the direction of the three phase mixture before any gas is separated from the mixture.

The submerged baffle 24 can be a plate or an inverted cone. The baffle 24 can be any shape as long as it does not trap any gas bubbles to form a gas-liquid interface. By installing the baffle 24 below the liquid level 26 but above the draft tube 16, the buoyancy force is converted into rotational force. Dead spaces are eliminated as the intensity of horizontal agitation is increased and recirculating loops are formed to sweep any settled crystals into the draft tube 16. Placing the baffle 24 below the liquid level substantially reduces the waves and splashes.

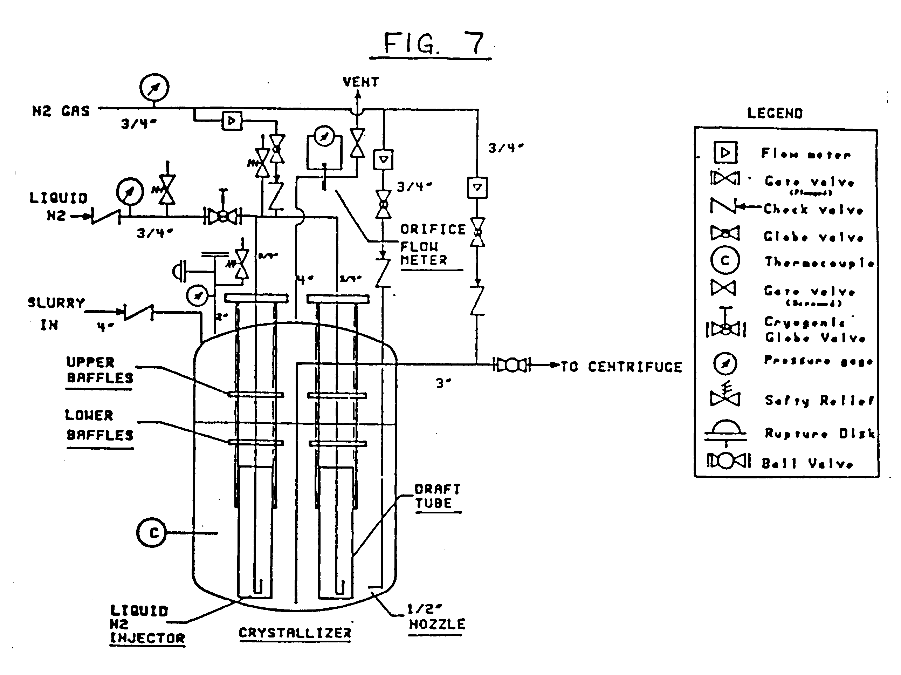

For a given gas-liquid flow rate, the ideal position of the baffle 24 is approximately 100 mm (four inches (4")) from the top opening of the draft tube 16. However, the optimum position changes with the size of the draft tube and the gas-liquid flow rate. The upper baffles shown in Fig. 7 embodiment do not have a critical function. They are merely used to stabilize the draft tube supports and keep splashes (if there are still any) from the reaching the vent or sight glasses.

Finished crystals are either removed by pump or by pressure transfer. In pressure transfer, the exhaust vent for the gas is closed to pressurize the vessel and the slurry is discharged to a filter. Crystals are ready for removal when the sizes are large enough or within specifications. In commercial practice, crystals are removed when a certain temperature is reached.

This is not a pressurized system. Rather, it is pressurized only when pressure transfer is used instead of a pump. In this case, the pressure will be slightly larger than the liquid head during transfer.

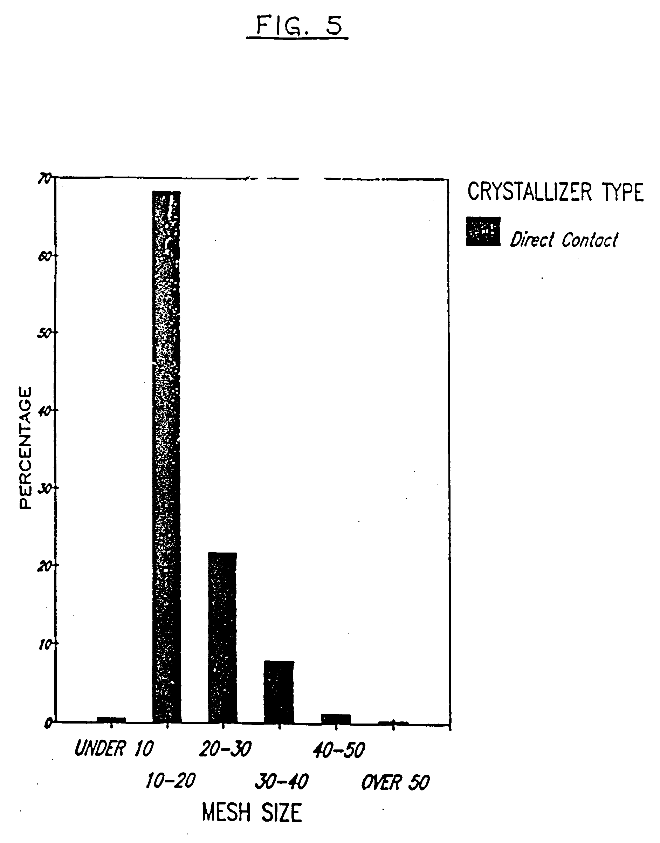

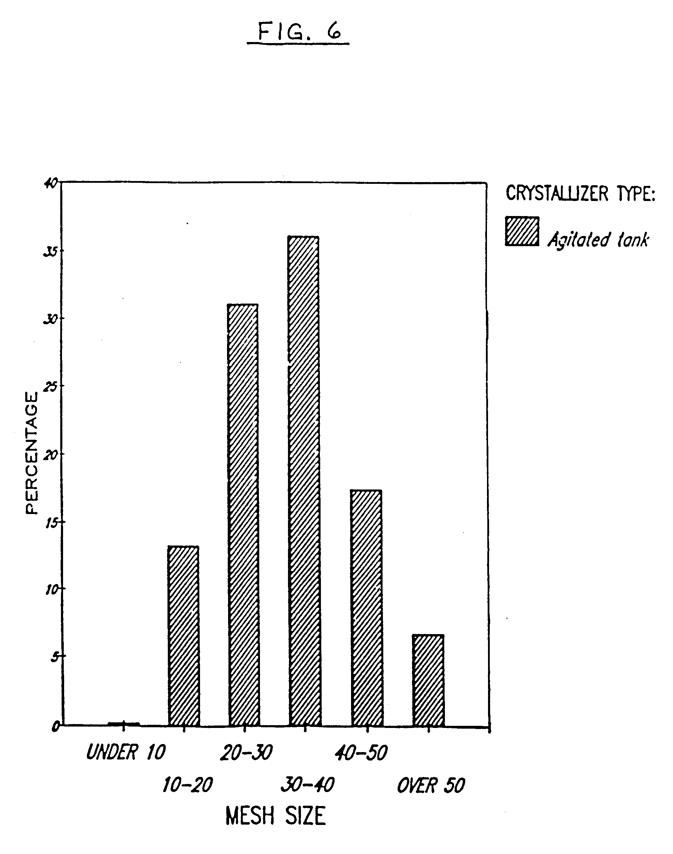

Figs. 5 and 6 show crystal size distributions for the direct contact crystallizer of this invention compared to a conventional crystallizer. When citric acid was cooled by direct contact, approximately sixty-eight percent of the crystals were in the 0.84 to 2.00 mm (10-20 mesh) size (the smaller the mesh number, the larger the crystals). In contrast, as shown in Fig. 6, when the citric acid was cooled in a stirred tank crystallizer, only thirteen percent of the crystals were in the 0.84 to 2.00 mm (10-20 mesh) size.

Referring again to the embodiment in Fig. 4, this direct contact crystallizer is directed toward continuous crystallization when destruction of fine crystals and product removal may be necessary. An inverted cylinder 30 is used to withdraw liquid and fine crystals from the crystallizer. However, larger crystals with a higher settling rate are not sucked into the cylinder 30 due to the slow flow rate of the liquid outside of the draft tube. The fine crystals or nuclei are destroyed by applying heat or solvent dilution at the liquid outlet. A Coulter particle counter 32 can be used to monitor the size and amount of the nuclei. Afterward, the liquid is pumped back to the crystallizer through pump 34.

The principle of operation behind this embodiment is similar to that of the first embodiment except a pump is used to recirculate the slurry. Therefore, the gas and the slurry pass through the draft tube at a higher velocity. The pump provides momentum to the body of the slurry entering the draft tube.

Secondary nucleation may occur if some of the fine crystals escape destruction at the heating section. However, supersaturation is lower at this point due to increase in temperature. Thus, secondary nucleation can be limited to an amount just sufficient for growth in a continuous crystallizer. Furthermore, by controlling the heating rate and recirculation rate, crystal size distribution can be controlled. Finally, products can be continuously withdrawn while new nuclei are being formed.

This crystallizer is especially suitable for crystals which have a very limited temperature range at which crystallization can occur. By increasing the heat load at recirculation, the crystallizer can be isothermally operated and super-saturation can be driven only by concentration gradient.

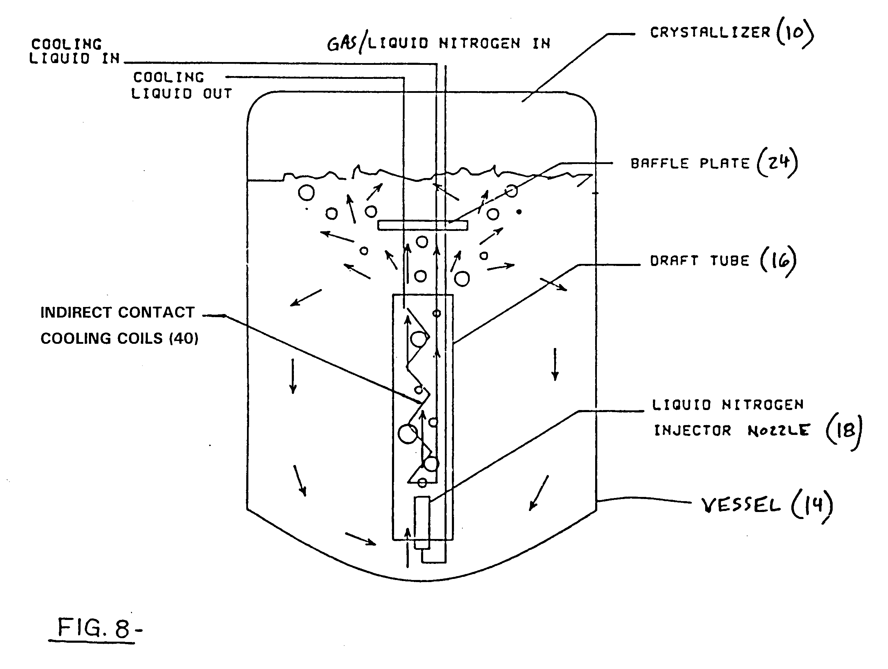

Referring to the embodiment in Fig. 8, this direct contact crystallizer uses indirect contact cooling coils 40 in combination with a liquid/gas nitrogen injection nozzle 18. In order to achieve a maximum rate of cooling. Ice formation and crystal fouling are not as severe as in the cooling coils of a conventional agitated tank. This is because the extremely turbulent condition inside the draft tube will keep the crystals from adhering to the cold surface. Furthermore, the high gas-liquid velocity reduces the thermal boundary layer on the cooling coil surface, resulting in elimination of cold spots.

## Claims

1. A direct contact crystallizer (10) for cooling and agitating a crystal slurry (12) and continuously suspending crystallizing solids, comprising

   a vessel (14) containing said crystal slurry (12),

   a vertical draft tube (16) positioned in said vessel (14), said draft tube having an upper end located below the liquid level (26) of said crystal slurry and a lower end spaced above the bottom surface of said vessel; and an injection nozzle (18) made of polytetrafluoroethylene, or other fluorohydrocarbon, positioned at said lower end of said draft tube (16), and adapted to inject cold nitrogen gas or vaporized liquid nitrogen into said draft tube.

2. A direct contact crystallizer according to claim 1 wherein said gas or vaporized liquid form gas bubbles (22) which rise and force said crystal slurry (12) and crystallizing solids to flow upwards through said draft tube (16).

3. A direct contact crystallizer according to claim 2 wherein said crystal slurry (12) flowing through said draft tube (16) has a velocity great enough to suspend said crystallizing solids.

4. A direct contact crystallizer according to claim 1 wherein said gas or vaporized liquid is injected at a sonic velocity of approximately 305 m/s (1000 ft/sec).

5. A direct contact crystallizer according to claim 1, further comprising:

   a baffle plate (24) positioned above said upper end of said draft tube (16) and below said liquid level (26), said baffle plate adapted to circulate said crystal slurry (12) and crystallizing solids to outside of said draft tube.

6. A direct contact crystallizer according to claim 5 wherein said baffle (24) has a plate-like configuration which prevents gas bubbles from becoming trapped underneath and forming a gas-liquid interface.

7. A direct contact crystallizer according to claim 5 wherein said baffle (24) has an inverted cone-like configuration which prevents gas bubbles from becoming trapped underneath and forming a gas-liquid interface.

8. A direct contact crystallizer according to claim 1 wherein said draft tube (16) is positioned to form an annular opening between said lower end of said draft tube and a bottom surface of said vessel (14) sufficient to create a fluid suction velocity which is greater than a settling velocity of said crystallizing solids.

9. A direct contact crystallizer according to claim 8 wherein the distance between said lower end of said draft tube (16) and said bottom surface of said vessel (14) is approximately one-fourth the inside diameter of said draft tube.

10. A direct contact crystallizer according to claim 8 wherein said bottom surface of said vessel (14) is conically-shaped to direct settling particles toward said lower end of said draft tube (16).

11. A direct contact crystallizer according to claim 1 wherein the diameter of said draft tube (16) ranges from approximately 1 percent to approximately 70.7 percent of the diameter of said vessel (14).

12. A direct contact crystallizer according to claim 11 wherein the diameter of said draft tube (16) ranges from approximately 10 percent to approximately 20 percent of the diameter of said vessel (14).

13. A direct contact crystallizer according to claim 1 wherein the end of said injection nozzle (18) has a reduced diameter to increase injection velocity and to prevent liquid from reentering said nozzle.

14. A direct contact crystallizer according to claim 1 wherein the wall of said injection nozzle (18) is thick enough so that the temperature on the outer surface of the wall is close to the temperature of said crystal slurry (12).

15. A direct contact crystallizer according to claim 14 wherein the thickness of said wall is calculated as $L = -K_aA (T_0 - T_1)/Q$, where $L$ = wall thickness, $K_a$ = thermal conductivity of the material from which said nozzle (18) is made, $A$ = area, $T_0$ = temperature of said slurry, $T_1$ = temperature of said gas or vaporized liquid inside said nozzle, and $Q$ = total heat flux.

16. A direct contact crystallizer according to claim 1 wherein said nozzle (18) has an inner wall, an outer wall, and hollow chamber between said inner and outer walls.

17. A direct contact crystallizer according to claim 1, further comprising a double walled pipe (20) supplying gas or vaporized liquid to said injection nozzle (18).

18. A direct contact crystallizer according to claim 1, further comprising an inverted cylinder (30) withdrawing fine crystals from said crystal slurry (12).

19. A method of cooling and agitating a crystal slurry (12) in a crystallizer vessel (14) having a draft tube (16) comprising the steps of:
injecting cold nitrogen gas or vaporized liquid nitrogen through an injection nozzle (18) made of polytetrafluoroethylene or other fluorohydrocarbon into a lower end of said draft tube (16) to create gas bubbles (22) which expand and rise within said draft tube;
directing said crystal slurry (12) into said lower end of said draft tube (16) to mix with said gas bubbles (22) and flow upwards through said draft tube;
deflecting said crystal slurry (12) and said gas bubbles (22) to flow outwardly of said draft tube (16) and to circulate toward said nozzle (18) at said lower end of said draft tube; and
remixing said crystal slurry (12) with said gas bubbles (22) to recirculate upwardly through said draft tube (16).

**Patentansprüche**

1. Direktkontakt-Kristallisator (10) zum Kühlen und Bewegen einer Kristallaufschlämmung (12) und zum kontinuierlichen Suspendieren von kristallisierenden Feststoffen, versehen mit einem die Kristallaufschlämmung (12) enthaltenden Behälter (14), einem in dem Behälter (14) angeordneten, senkrechten Leitrohr (16), das ein unterhalb des Flüssigkeitsspiegels (26) der Kristallaufschlämmung liegendes oberes Ende und ein in Abstand von der Bodenfläche des Behälters liegendes unteres Ende aufweist; und
einer aus Polytetrafluorethylen oder anderem Fluorkohlenwasserstoff gefertigten Injektordüse (18), die an dem unteren Ende des Leitrohrs (16) angeordnet ist und über die kaltes Stickstoffgas oder verdampfter flüssiger Stickstoff in das Leitrohr eingeblasen werden kann.

2. Direktkontakt-Kristallisator nach Anspruch 1, bei dem das Gas oder die verdampfte Flüssigkeit Gasblasen (22) bilden, die hochsteigen und die Kristallaufschlämmung (12) und kristallisierende Feststoffe zwingen, nach oben durch das Leitrohr (16) zu strömen.

3. Direktkontakt-Kristallisator nach Anspruch 2, bei dem die durch das Leitrohr (16) strömende Kristallaufschlämmung (12) eine Geschwindigkeit hat, die ausreichend hoch ist, um die kristallisierenden Feststoffe zu suspendieren.

4. Direktkontakt-Kristallisator nach Anspruch 1, bei dem das Gas oder die verdampfte Flüssigkeit mit einer Schallgeschwindigkeit von näherungsweise 305 m/sec (1000 Fuß/sec) eingeblasen wird.

5. Direktkontakt-Kristallisator nach Anspruch 1, ferner versehen mit:
einer Umlenkplatte (24), die über dem oberen Ende des Leitrohrs (16) und unter dem Flüssigkeitsspiegel (26) angeordnet ist und die in der Lage ist, die Kristallaufschlämmung (12) und kristallisierende Feststoffe zur Außenseite des Leitrohres hin zirkulieren zu lassen.

6. Direktkontakt-Kristallisator nach Anspruch 5, bei dem die Umlenkung (24) eine plattenartige Konfiguration hat, die verhindert, daß Gasblasen darunter eingefangen werden und eines Gas-Flüssigkeits-Grenzfläche bilden.

7. Direktkontakt-Kristallisator nach Anspruch 5, bei dem die Umlenkung (24) eine umgekehrt konische Ausbildung hat, die verhindert, daß Gasblasen darunter eingefangen werden und eine Gas-Flüssigkeits-Grenzfläche bilden.

8. Direktkontakt-Kristallisator nach Anspruch 1, bei dem das Leitrohr (16) so angeordnet ist, daß eine ringförmige Öffnung zwischen dem unteren Ende des Leitrohrs und einer Bodenfläche des Behälters (14) gebildet wird, die ausreicht, um eine Fluidsauggeschwindigkeit zu erzeugen, die größer als die Absetzgeschwindigkeit der kristallisierenden Feststoffe ist.

9. Direktkontakt-Kristallisator nach Anspruch 8, bei dem der Abstand zwischen dem unteren Ende des Leitrohrs (16) und der Bodenfläche des Behälters (14) näherungsweise gleich einem Viertel des Innendurchmessers des Leitrohres ist.

10. Direktkontakt-Kristallisator nach Anspruch 8, bei dem die Bodenfläche des Behälters (14) konisch ausgebildet ist, um sich absetzende Partikel in Richtung auf das untere Ende des Leitrohrs (16) zu leiten.

11. Direktkontakt-Kristallisator nach Anspruch 1, bei dem der Durchmesser des Leitrohrs (16) zwischen etwa 1 % und etwa 70,7 % des Durchmessers des Behälters (14) beträgt.

12. Direktkontakt-Kristallisator nach Anspruch 11, bei dem der Durchmesser des Leitrohrs (16) zwischen etwa 10 % und etwa 20 % des Durchmessers des Behälters (14) liegt.

13. Direktkontakt-Kristallisator nach Anspruch 1, bei dem das Ende der Injektordüse (18) einen verminderten Durchmesser hat, um die Einblasgeschwindigkeit zu steigern und Flüssigkeit daran zu hindern, in die Düse einzutreten.

14. Direktkontakt-Kristallisator nach Anspruch 1, bei dem die Wand der Injektordüse (18) ausreichend dick ist, so daß die Temperatur an der Außenfläche der Wand nahe der Temperatur der Kristallaufschlämmung (12) liegt.

15. Direktkontakt-Kristallisator nach Anspruch 14, bei dem die Dicke der Wand als $L = -K_a A(T_0 - T_1)/Q$ errechnet ist, wobei $L$ = Wanddicke, $K_a$ = Wärmeleitfähigkeit des Werkstoffes, aus dem die Düse (18) gefertigt ist, $A$ = Fläche, $T_0$ = Temperatur der Aufschlämmung, $T_1$ = Temperatur des Gases oder der verdampften Flüssigkeit innerhalb der Düse, und $Q$ = gesamter Wärmestrom.

16. Direktkontakt-Kristallisator nach Anspruch 1, bei dem die Düse (18) eine Innenwand, eine Außenwand und eine zwischen der Innenwand und der Außenwand befindliche Hohlkammer aufweist.

17. Direktkontakt-Kristallisator nach Anspruch 1, ferner versehen mit einem doppelwandigen Rohr (20) zur Zufuhr von Gas oder von verdampfter Flüssigkeit zu der Injektordüse (18).

18. Direktkontakt-Kristallisator nach Anspruch 1, ferner versehen mit einem invertierten Zylinder (30) zum Abziehen von feinen Kristallen aus der Kristallaufschlämmung (12).

19. Verfahren zum Kühlen und Bewegen einer Kristallaufschlämmung (12) in einem Kristallisatorbehälter (14), der mit einem Leitrohr (16) versehen ist, bei dem:

kaltes Stickstoffgas oder verdampfter flüssiger Stickstoff durch eine aus Polytetrafluorethylen oder anderem Fluorkohlenwasserstoff gefertigte Injektordüse (18) in ein unteres Ende des Leitrohrs (16) eingeblasen wird, um Gasblasen (22) zu erzeugen, die sich ausdehnen und innerhalb des Leitrohrs nach oben steigen;

die Kristallaufschlämmung (12) in das untere Ende des Leitrohrs (16) geleitet wird, damit sie sich mit den Gasblasen (22) mischt und durch das Leitrohr hindurch nach oben strömt;

die Kristallaufschlämmung (12) und die Gasblasen (22) umgelenkt werden, um außerhalb des Leitrohrs (16) zu strömen und zurück in Richtung auf die Düse (18) an dem unteren Ende des Leitrohrs zu zirkulieren; und

die Kristallaufschlämmung (12) mit den Gasblasen (22) erneut gemischt wird, um nach oben durch das Leitrohr (16) hindurch umgewälzt zu werden.

## Revendications

1. Dispositif de cristallisation par contact direct (10) destiné à refroidir et à agiter une suspension épaisse cristalline (12) et des solides cristallisant continûment en suspension, comprenant:

une cuve (14) contenant ladite suspension épaisse cristalline (12),

un tube de circulation vertical (16) positionné dans ladite cuve (14), ledit tube de circulation ayant une extrémité supérieure située au-dessous du niveau de liquide (26) de ladite suspension épaisse cristalline et une extrémité inférieure écartée au-dessus de la surface inférieure de ladite cuve; et

une buse d'injection (18) fabriquée en polytétrafluoroéthylène, ou en un autre fluorohydrocarbone, positionnée à l'extrémité inférieure dudit tube de circulation (16) et adaptée pour injecter de l'azote gazeux froid ou de l'azote liquide vaporisé dans ledit tube de circulation.

2. Dispositif de cristallisation par contact direct selon la revendication 1, dans lequel ledit gaz ou ledit liquide vaporisé forme des bulles de gaz (22) qui soulèvent et forcent ladite suspension épaisse cristalline (12) et les solides cristallisants à s'écouler vers le haut à travers ledit tube de circulation (16).

3. Dispositif de cristallisation par contact direct selon la revendication 2, dans lequel ladite suspension épaisse cristalline (12) s'écoulant à travers ledit tube de circulation (16) a une vitesse suffisamment grande pour mettre en suspension lesdits solides cristallisants.

4. Dispositif de cristallisation par contact direct selon la revendication 1, dans lequel ledit gaz ou ledit liquide vaporisé est injecté à la vitesse sonique d'environ 305 m/s (1000 pieds/sec).

5. Dispositif de cristallisation par contact direct selon la revendication 1, comprenant en outre:

un écran réducteur de pression (24) positionné au-dessus de ladite extrémité supérieure dudit tube de circulation (16) et au-dessous dudit niveau de liquide (26), ledit écran réducteur de pression étant adapté pour faire circuler ladite suspension épaisse cristalline (12) et lesdits solides cristallisants à l'extérieur dudit tube de circulation.

6. Dispositif de cristallisation par contact direct selon la revendication 5, dans lequel ledit réducteur de pression (24) posséde une configuration de type écran qui empêche les bulles de gaz d'être piégées en dessous et de former une interface gaz-liquide.

7. Dispositif de cristallisation par contact direct selon la revendication 5, dans lequel ledit réducteur de pression (24) posséde une configuration de type cône inversé qui empêche les bulles de gaz d'être piégées en dessous et de former une interface gaz-liquide.

8. Dispositif de cristallisation par contact direct selon la revendication 1, dans lequel ledit tube de circulation (16) est positionné pour formé une ouverture annulaire entre ladite extrémité dudit tube de circulation et une surface inférieure de ladite cuve (14) qui soit suffisante pour créer une vitesse d'aspiration de fluide qui soit supérieure à la vitesse de décantation desdits solides cristallisants.

9. Dispositif de cristallisation par contact direct selon la revendication 8, dans lequel la distance entre ladite extrémité inférieure dudit tube de circulation (16) et ladite surface inférieure de ladite cuve (14) est égale à environ un quart du diamètre intérieur dudit tube de circulation.

**10.** Dispositif de cristallisation par contact direct selon la revendication 8, dans lequel ladite surface inférieure de ladite cuve (14) a une forme conique pour diriger les particules de décantation vers l'extrémité inférieure dudit tube de circulation (16).

**11.** Dispositif de cristallisation par contact direct selon la revendication 1, dans lequel le diamètre dudit tube de circulation (16) est compris entre 1% environ et 70,7% environ du diamètre de ladite cuve (14).

**12.** Dispositif de cristallisation par contact direct selon la revendication 11, dans lequel le diamètre dudit tube de circulation (16) est compris entre 10% environ et 20% environ du diamètre de ladite cuve (14).

**13.** Dispositif de cristallisation par contact direct selon la revendication 1, dans lequel l'extrémité de ladite buse d'injection (18) a un diamètre réduit pour augmenter la vitesse d'injection et pour empêcher le liquide de réentrer dans ladite buse.

**14.** Dispositif de cristallisation par contact direct selon la revendication 1, dans lequel la paroi de ladite buse d'injection (18) a une épaisseur suffisante pour que la température sur la surface externe de la paroi soit proche de la température de ladite suspension épaisse cristalline (12).

**15.** Dispositif de cristallisation par contact direct selon la revendication 1, dans lequel l'épaisseur de ladite paroi est calculée selon $L = -K_a A (T_0-T_1)/Q$, avec $L$ = épaisseur de paroi, $K_a$ = conductivité thermique du matériau à partir duquel est fabriquée ladite buse (18), $A$ = surface, $T_0$ = température de ladite suspension épaisse, $T_1$ = température dudit gaz ou dudit liquide vaporisé à l'intérieur de ladite buse et $Q$ = flux de chaleur total.

**16.** Dispositif de cristallisation par contact direct selon la revendication 1, dans lequel ladite buse (18) posséde une paroi interne, une paroi externe et une chambre creuse entre lesdites parois interne et externe.

**17.** Dispositif de cristallisation par contact direct selon la revendication 1, comprenant en outre un conduit à double paroi (20) alimentant en gaz ou en liquide vaporisé ladite buse d'injection (18).

**18.** Dispositif de cristallisation par contact direct selon la revendication 1, comprenant en outre un cylindre inversé (30) soutirant les cristaux fins de ladite suspension épaisse cristalline (12).

**19.** Procédé destiné à refroidir et à agiter une suspension épaisse cristalline (12) dans une cuve de cristallisateur (14) comportant un tube de circulation vertical (16), comprenant les étapes consistant à:

injecter de l'azote gazeux froid ou de l'azote liquide vaporisé à travers une buse d'injection (18) fabriquée en polytétrafluoroéthylène, ou en un autre fluorohydrocarbone, dans l'extrémité inférieure dudit tube de circulation (16) pour créer des bulles de gaz (22) qui se dilatent et s'élèvent dans ledit tube de circulation;

diriger ladite suspension épaisse cristalline (12) dans ladite extrémité inférieure dudit tube de circulation (16) afin de la mélanger avec lesdites bulles de gaz (22) et de la faire s'écouler vers le haut à travers ledit tube de circulation;

faire dévier ladite suspension épaisse cristalline (12) et lesdites bulles de gaz (22) pour qu'elles s'écoulent vers l'extérieur dudit tube de circulation (16) et qu'elles circulent vers ladite buse (18) à ladite extrémité inférieure dudit tube de circulation; et

remélanger ladite suspension épaisse cristalline (12) avec lesdites bulles de gaz (22) pour qu'elles recirculent vers le haut à travers ledit tube de circulation (16).

GAS/LIQUID NITROGEN IN

CRYSTALLIZER (10)

LIQUID LEVEL (26)

BAFFLE PLATE (24)

CRYSTAL SLURRY (12)

DRIFT TUBE (16)

DOUBLE-WALLED PIPE (20)

GAS BUBBLES (22)

INJECTOR NOZZLE (18)

CRYSTALLIZER VESSEL (14)

SATURATED LIQUID IN

PRODUCT OUT

FIG. 1 -

EP 0 455 243 B1

HIGH VELOCITY NOZZLE

COMPRESSION CONE

NOZZLE CHAMBER

INNER TUBE FOR LIQUID TRASNFER

OUTER TUBE

BREAK CORNER

TEFLON NOZZLE WALL

HOLLOW CHAMBER

"O" RING

FIG. 2 -HOLLOW WALLED TEFLON NOZZLE FOR HIGH VELOCITY/VOLUME LIQUID NITROGEN FLOW

EP 0 455 243 B1

FIG. 3 - FREE CONVECTION DRAFT TUBE CRYSTALLIZER

FIG. 4 — FORCED CIRCULATION DRAFT TUBE CRYSTALLIZER

# FIG. 5

## FIG. 6

FIG. 7

LEGEND

COOLING LIQUID IN

COOLING LIQUID OUT

GAS/LIQUID NITROGEN IN

CRYSTALLIZER (10)

BAFFLE PLATE (24)

DRAFT TUBE (16)

INDIRECT CONTACT COOLING COILS (40)

LIQUID NITROGEN INJECTOR NOZZLE (18)

VESSEL (14)

FIG. 8-

EP 0 455 243 B1